# EUROPÄISCHE PATENTSCHRIFT

(11) **EP 2 443 325 B1**
(45) Veröffentlichungstag und Bekanntmachung des Hinweises auf die Patenterteilung: **01.11.2017**
(21) Anmeldenummer: 10723095.5
(22) Anmeldetag: 28.05.2010
(51) Int. Cl.: F01N 3/01, F01N 3/022, F01N 13/00

(54) **VORRICHTUNG UND VERFAHREN ZUR BEHANDLUNG EINES PARTIKEL AUFWEISENDEN ABGASES**
DEVICE AND METHOD FOR TREATING EXHAUST GAS CONTAINING PARTICLES
DISPOSITIF ET PROCÉDÉ DE TRAITEMENT DE GAZ D'ÉCHAPPEMENT PRÉSENTANT DES PARTICULES

(30) Priorität: 17.06.2009 DE 102009025136
(43) Veröffentlichungstag der Anmeldung: 25.04.2012
(73) Patentinhaber: Continental Automotive GmbH, 30165 Hannover (DE)
(72) Erfinder: MAUS, Wolfgang, 51429 Bergisch Gladbach (DE)
(86) Internationale Anmeldenummer: PCT/EP2010/057494
(87) Internationale Veröffentlichungsnummer: WO 2010/145931

(56) Entgegenhaltungen:
- EP-A2- 0 299 197
- DE-A1-102005 022 046
- DE-A1-102008 057 960
- JP-A- 57 148 017
- JP-A- 2003 269 134
- JP-A- 2006 342 730
- US-A- 4 406 119

## Beschreibung

Die vorliegende Erfindung betrifft eine Vorrichtung sowie ein Verfahren zur Behandlung eines Partikel aufweisenden Abgases mit einer Partikelagglomerationseinrichtung und einem Partikelabscheider. Die Erfindung findet insbesondere Anwendung im Bereich der Abgasbehandlung von mobilen Verbrennungskraftmaschinen, wie beispielsweise Diesel-Motoren.

Bei der Verbrennung von Benzin oder Diesel entstehen neben beispielsweise Kohlenmonoxid, Kohlenwasserstoff und Stickoxid auch so genannte Rußpartikel. Aufgrund der Gesundheitsgefährdung durch derartige Partikel sowie einer Reihe existierender gesetzlicher Vorgaben ist man bemüht, den Ausstoß von Partikeln bei Kraftfahrzeugen weiter zu reduzieren.

Hierzu wurde in der Vergangenheit vielfach auf einen so genannten Wandstromfilter zurückgegriffen, der meist als keramisch extrudierte Struktur ausgeführt wurde, wobei die Einlässe und Auslässe einer Vielzahl von Kanälen wechselseitig verschlossen sind. Damit konnte das Abgas in einen Teil der Kanäle eintreten und wurde dann aufgrund der Verschlüsse einmal vollständig durch die poröse Kanalwand hindurch gezwungen. Durch eine entsprechende Ausgestaltung der Porosität der Kanalwand konnten sehr hohe Effektivitäten bei der Absonderung von Partikeln erreicht werden. Problematisch ist hier jedoch, dass sich solche Wandstromfilter gelegentlich verblocken, wenn zu viele Partikel eingelagert sind und eine Regeneration nicht rechtzeitig angestoßen wurde. Zudem bilden solche Wandstromfilter einen erheblichen Staudruck im Abgassystem aus, was z. B. mit einem Leistungsverlust bei der Verbrennungskraftmaschine einhergeht.

Um dem Problem des Staudruckes entgegenzuwirken und gleichermaßen eine Partikelabscheidung im Umfang der gesetzlichen Vorgaben zu ermöglichen, wurden auch so genannte Nebenstromfilter entwickelt. Bei diesen Filtern werden die Kanäle nicht vollständig verschlossen, so dass es einem Nebenstrom stets möglich ist, durch den Kanal weiter zu strömen. In den Kanälen sind beispielsweise Umlenkungen, Leitschaufeln, Öffnungen und dergleichen vorgesehen, um durch Druckunterschiede in benachbarten Kanälen eine (teilweise) Durchströmung eines Filtermaterials zu bewirken. Dabei sind regelmäßig eine Vielzahl solcher Umlenkungen über die Kanallänge vorgesehen, um eine Ablenkung der Partikel bzw. des Abgases bei günstigen Bedingungen des umgebenden Filtermateriales zu erreichen und einen Nebenstrom zu verwirklichen, wenn hier beispielsweise das Filtermaterial bereits gefüllt ist.

Zur Regeneration solcher Wandstromfilter oder Nebenstromfilter ist bekannt, eine diskontinuierliche und/oder kontinuierliche Regeneration einzusetzen. Bei der diskontinuierlichen Regeneration wird vorgesehen, dass in Folge einer gezielten Wärmeeinbringung in den Partikelabscheider der Ruß verbrannt wird. Hierzu können beispielsweise unverbrannte Kraftstoffinengen auf eine katalytisch aktive Beschichtung im Abgassystem gegeben werden, wobei eine exotherme Reaktion erfolgt, die das Abgas bzw. den Partikelabscheider auf Temperaturen aufheizt, die für die Oxidation von Ruß ausreichend sind. Das kontinuierliche Verfahren, auch CRT-Verfahren (Continous Regneration Trap) genannt, nutzt zur Umsetzung des Rußes Stickstoffdioxid (NO₂). Zu diesem Zweck wird das im Abgas befindliche Stickstoffinonoxid unter Einsatz eines oxidativ wirkenden Katalysators und Luft bzw. Sauerstoff zu Stickstoffdioxid aufoxidiert und nachfolgend dem Ruß zugeführt. Dabei erfolgt eine Umsetzung des Rußes schon bei sehr niedrigen Temperaturen, wie beispielsweise bereits ab 250 °C.

Darüber hinaus wurde bereits auch vorgeschlagen, die Partikel im Abgasstrom durch ein mittels einem Elektrodenpaar erzeugten elektrischen Feldes elektrisch aufzuladen und zu einer Abscheideelektrode zu transportieren.

Die JP 2003-269134 A offenbart eine Vorrichtung zur Abgasreinigung, wobei stromabwärts einer Elektrode eine Agglomerationsvorrichtung angeordnet ist, die als Gegenelektrode zur Elektrode eingesetzt wird. Diese Agglomerationsvorrichtung ist mit dem Gehäuse und mit der Erdung verbunden.

Die JP 2006-342730 offenbart eine Elektrode, von der stromabwärts ein elektrisch leitendes Netz angeordnet ist. Es ist dort ausgeführt, dass das Netz mit dem Gehäuse schweißtechnisch und mit der Erdung elektrisch verbunden ist und damit ein Nullpotential aufweist.

Aus US 4,406,119 ist eine Abgasanlage mit einem Ionisationselement, einem Agglomerationselement und einem Fliehkraftabscheider bekannt, wobei in dem Agglomerationselement agglomerierte Partikel aufgrund ihrer erhöhten Massenträgheit im Fliehkraftabscheider abgeschieden werden.

JP 57-148017 offenbart eine Abgasanlage mit einem Ionisationselement, einer Zyklonkammer und einem Filterelement. Agglomerierte Partikel werden in der Zyklonkammer von dem übrigen Abgasstrom separiert. Die in der Zyklonkammer separierten Rußpartikel werden dem Filterelement zugeführt. Der Anteil des Abgases, der keine agglomerierten Partikel enthält, wird über einen Bypass an dem Filterelement vorbeigeführt, so dass es nicht zu einem Druckabfall über dem Filterelement kommt.

EP 0 299 197 A2 beschreibt einen elektrostatischen Filter zum Reinigen von Gasen, bei dem eine zentrale Elektrode in einem rohrförmigen Abschnitt einer Abgasleitung angeordnet ist. Durch ein elektrisches Feld werden Rußpartikel ionisiert und zur Abgasleitung hin abgelenkt und dort abgelagert. Die abgelagerten Rußpartikel werden verbrannt.

Die bekannten Systeme haben jedoch teilweise nicht dauerhaft hinsichtlich ihrer Abscheidewirkung, Regeneration und/oder ihrer Einflussnahme auf den Betrieb der Verbrennungskraftmaschine überzeugt. Außerdem sind diese Konzepte zum Teil sehr aufwendig und demnach teuer.

Hiervon ausgehend ist es Aufgabe der vorliegenden Erfindung, die mit Bezug auf den Stand der Technik geschilderten Probleme zumindest teilweise zu lösen. Insbesondere sollen eine Vorrichtung und ein Verfahren zur Behandlung von Partikeln angegeben werden, so dass auch bei geringem Druckverlust eine hohe Abscheidewirkung der Abgasanlage möglich ist.

Diese Aufgaben werden gelöst mit einer Vorrichtung gemäß den Merkmalen des Patentanspruchs 1 sowie einem Verfahren gemäß den Merkmalen des Patentanspruchs 5. Weitere bevorzugte Ausführungsvarianten und Anwendungsgebiete ergeben sich aus den abhängig formulierten Patentansprüchen. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung und gibt weitere Ausführungsbeispiele an.

Die erfindungsgemäße Vorrichtung zur Behandlung eines Partikel aufweisenden Abgases umfasst zumindest eine Partikelagglomerationseinrichtung und einen Partikelabscheider, wobei die Partikelagglomerationseinrichtung wenigstens eine Apparatur zur Ausbildung eines elektrischen Feldes sowie eine für das Abgas durchströmbare Partikelzwischenspeichervorrichtung aufweist und in Strömungsrichtung des Abgases vor dem Partikelabscheider positioniert ist, wobei der Partikelabscheider einen Wandstromfilter oder einen Nebenstromfilter umfasst.

Die Vorrichtung behandelt insbesondere das Abgas mobiler Verbrennungskraftmaschinen, wie beispielsweise Diesel-Motoren. Bei den Partikeln sind insbesondere Rußpartikel im Fokus, gleichwohl können hier aber auch andere Partikel mit betroffen sein.

In Strömungsrichtung des Abgases sind (bevorzugt direkt unmittelbar) nacheinander folgend eine Partikelagglomerationseinrichtung und ein Partikelabscheider vorgesehen. Hierbei ist auch möglich, dass z. B. für den Fall, dass verschiedene Abgasstränge vorgesehen sind, für jeden dieser Abgasstränge eine entsprechende Vorrichtung vorgesehen ist. Zudem ist auch möglich, dass nur ein Teil des Abgases mit einer entsprechenden Vorrichtung behandelt wird.

Die Partikelagglomerationseinrichtung dient dazu, die im Abgas enthaltenen, von der Verbrennungskraftmaschine erzeugten, Partikel zu vergrößern. Hierzu werden die Partikel mit Hilfe eines elektrischen Feldes gezielt an einer Partikelzwischenspeichervorrichtung angelagert, wobei die Partikel aufeinander zur Anlage kommen und sich aufgrund ihrer Haftneigung zueinander vergrößern. Haben die Partikel an bzw. auf der Partikelzwischenspeichervorrichtung eine gewünschte Größe erreicht, werden diese durch das Abgas wieder mitgerissen und dem nachfolgenden elektrisch neutralen Partikelabscheider zugeführt. In Folge der gezielten Agglomeration mehrerer Partikel kann der elektrisch neutrale Partikelabscheider nun so ausgelegt werden, dass dieser eine entsprechende Abscheideleistung hinsichtlich der größeren Partikel-Agglomerate aufweist. Dies hat insbesondere auch zum Ergebnis, dass der nachfolgende Partikelabscheider "offener" ausgeführt sein kann, wobei die Probleme im Zusammenhang mit dem steigenden Druckverlust bei einem sich zusetzenden Filter deutlich reduziert werden können.

Im Hinblick auf die Apparatur zur Ausbildung eines elektrischen Feldes ist auch anzumerken, dass hier die zu agglomerisierenden Partikel in einem elektrostatischen Feld aufgeladen werden und sich aufgrund ihrer Ladung verstärkt hin zur Partikelzwischenspeichervorrichtung und/oder zueinander bewegen.

Dabei ist erfindungsgemäß, dass die Partikelzwischenspeichervorrichtung mit einem elektrischen Pol verbunden ist. Damit wird insbesondere eine Kraft auf die ionisierten Partikel ausgeübt, so dass sich diese verstärkt und konzentriert an der Partikelzwischenspeichervorrichtung anlagern. Die Oberflächen dieser Partikel haben sehr gute Hafteigenschaften gegenüber anderen Partikeln, so dass die Partikel-Agglomerate auch nach einer De-Ionisierung fest aneinander kleben. Dazu ist die Partikelzwischenspeichervorrichtung mit dem elektrischen Pol verbunden, der der Ladung der Partikel entgegengesetzt ist. Als weiterer Effekt ist anzumerken, dass damit auch die Haltekräfte der Partikel-Agglomerate an der Partikelzwischenspeichervorrichtung reduziert werden, so dass dann ein baldiges Wieder-Losreißen der Partikel-Agglomerate durch die Abgasströmung gewährleistet ist. Die nunmehr relativ großen, elektrisch neutralen Partikel-Agglomerate werden dem Partikelabscheider zugeführt, wobei hier elektrostatische Effekte weitestgehend nicht mehr auftreten und eine gleichmäßige Nutzung des Partikelabscheiders gewährleistet ist.

Erfindungsgemäß weist die Partikelzwischenspeichervorrichtung mindestens eine offene Struktur mit einer Vielzahl von Durchlässen auf. Wie bereits weiter oben ausgeführt, ist die Partikelzwischenspeichervorrichtung für das Abgas durchströmbar. Damit ist kein einfacherer Rohrabschnitt gemeint, sondern eine dem Abgasstrom entgegen gestellte Vorrichtung, deren Wandung vom Abgas selbst durchströmt wird. Hier wird insbesondere eine offene Struktur mit einer Vielzahl von Durchlässen vorgeschlagen. Damit soll insbesondere zum Ausdruck gebracht werden, dass der Abgasstrom von der Partikelzwischenspeichervorrichtung bzw. der offenen Struktur in eine Vielzahl von kleinen Teilabgasströmungen aufgeteilt wird, die dann durch die Vielzahl der Durchlässe der offenen Struktur hindurchgeführt werden. Dazu ist die Partikelzwischenspeichervorrichtung insbesondere quer bzw. senkrecht zur Strömungsrichtung des Abgases positioniert und wird demnach insbesondere großflächig angeströmt. Die Durchlässe haben dahingehend in Strömungsrichtung meist nur eine sehr kurze Ausdehnung. Damit ist die offene Struktur insbesondere scheibenförmig, plattenförmig ausgeführt. Die Anzahl der Durchlässe beträgt insbesondere mehr als 20, insbesondere mehr als 100. Mit einer "offenen" Struktur wird insbesondere angegeben, dass keine Strömungssackgassen vorgegeben sind, sondern die Durchlässe (gradlinig und/oder (mehrfach) gebogen) durchströmt werden können. Dabei liegt insbesondere eine "offene" Struktur vor, wenn in einem bzw. jedem Querschnitt durch die Struktur senkrecht zur Strömungsrichtung mehr frei durchströmbare Anteile vorliegen als von der Struktur selbst. Vergleicht man hierbei die Flächen untereinander, so liegt eine "offene" Struktur insbesondere dann vor, wenn in einem bzw. jedem Querschnitt der Flächenanteil der frei durchströmbaren Bereiche größer als 50 %, insbesondere größer als 80 %, ist.

Demnach ist ganz besonders bevorzugt, dass die mindestens eine offene Struktur scheibenförmig ausgebildet ist und zumindest eines der folgenden Elemente umfasst: Gitter, Gewebe, Vlies, Schaum, Wabenstruktur. Mit einer "scheibenförmigen" Ausgestaltung der offenen Struktur soll insbesondere veranschaulicht sein, dass die Erstreckung der offenen Struktur in Richtung der Strömungsrichtung des Abgases (deutlich, insbesondere um ein Vielfaches) kleiner ist als senkrecht dazu. So kann die offene Struktur beispielsweise als Gitter ausgeführt werden. Dazu können mehrere Stäbe miteinander verbunden sein. Dabei kann das Gitter beispielsweise nach Art eines Siebes mittels miteinander verschweißter Drähte ausgeführt sein. Auch ist möglich, ein Gewebe mit solchen Drähten zu bilden, wobei die Drähte nicht nur aufeinander aufliegen, sondern einander teilweise umschlingen. Selbstverständlich kann auch eine mehr oder weniger chaotische Anordnung der Drähte bzw. Drahtfilamente vorliegen, wie dies z. B. bei einem Vlies der Fall ist. Während beim Vlies die einzelnen Drähte miteinander z. B. verschweißt sind, kann eine entsprechende offene Struktur auch mittels eines Schaumes gebildet sein, der ebenfalls ein chaotisches Kanalsystem aufbaut. Ein regelmäßiges Kanalsystem kann auch über eine Wabenstruktur gebildet sein, beispielsweise mit wenigstens einer glatten und wenigstens einer gewellten Metallfolie. Ebenfalls ist bevorzugt, dass die scheibenförmig ausgestaltete, offene Struktur mit einem elektrisch leitfähigen Material gebildet ist, insbesondere Metall. Generell können auch mehrere (gleichartige oder verschiedene) Strukturen kombiniert werden.

Gemäß einer Weiterbildung der Vorrichtung wird vorgeschlagen, dass die Apparatur zur Ausbildung eines elektrischen Feldes eine Sprühelektrode umfasst. Selbstverständlich ist auch möglich, mehrere Sprühelektroden vorzusehen. Die Sprühelektrode kann mit entsprechend geformten Einzelelektroden ausgeführt sein, es ist aber auch möglich, hier beispielsweise ringförmige, scheibenförmige oder ähnliche Varianten einer Sprühelektrode vorzusehen.

Erfindungsgemäß ist der Partikelabscheider elektrisch neutral und weist einen Wandstromfilter oder einen Nebenstromfilter auf Im Hinblick auf die möglichen Ausgestaltungen eines Wandstromfilters und/oder eines Nebenstromfilters wird auf die eingangs erwähnten Ausführungen sowie die Figurenbeschreibungen später verwiesen. Die Tatsache, dass der Partikelabscheider elektrisch neutral ist, führt dazu, dass keine verstärkte Anordnung der Partikel-Agglomerate im Eingangsbereich des Partikelabscheiders stattfindet. Damit ist eine gleichmäßigere Beladung des Partikelabscheiders bzw. des Filtermaterials im Partikelabscheider erreicht. Die Bereitstellung eines Wandstromfilters und/oder eines Nebenstromfilters erlaubt die Unterbringung einer sehr großen Filterfläche in einem kleinen Bauvolumen, so dass insbesondere hier die Vorzüge gegenüber einem Fliehkraftabscheider vorliegen.

Gemäß einem weiteren Aspekt der Erfindung wird ein Verfahren zur Behandlung eines Partikel aufweisenden Abgases vorgeschlagen, dass zumindest die folgenden Schritte umfasst:
a) Aufladen der Partikel in einem elektrischen Feld,
b) Zuführen der elektrisch aufgeladenen Partikel zu einer vom Abgas durchströmbaren Partikelzwischenspeichervorrichtung mit mindestens einer offenen Struktur mit einer Vielzahl und Durchlässen unter Einsatz von elektrischen Anziehungskräften, wobei die Partikelzwischenspeichervorrichtung mit einem elektrischen Pol verbunden ist, der der Ladung der Partikel entgegengesetzt ist.
c) Ablagern der Partikel an der Partikelzwischenspeichervorrichtung aufeinander, so dass Partikel-Agglomerate gebildet werden,
d) Entfernen der Partikel-Agglomerate von der Partikelzwischenspeichervorrichtung,
e) Zuführen der Partikel-Agglomerate zu einem Partikelabscheider,
f) Umwandeln der Partikel-Agglomerate in dem Partikelabscheider.

Das Verfahren kann insbesondere mit der erfindungsgemäßen Vorrichtung verwirklicht werden. Deshalb sind die Erläuterungen zur erfindungsgemäßen Vorrichtung auch für das erfindungsgemäße Verfahren heranzuziehen.

In Schritt a) wird demnach eine Ionisierung der Partikel, insbesondere Ruß, erreicht. Grundsätzlich ist möglich, die Partikel entweder mit einer positiven Ladung oder mit einer negativen Ladung zu versehen, wobei jeweils ein entsprechendes elektrisches Feld einzurichten ist. Gegebenenfalls ist es auch möglich, hier wechselweise unterschiedliche Ladungen bei den Partikeln vorzusehen, indem beispielsweise das elektrische Feld nach vorgegebenen Zeitintervallen verändert wird.

Die so ionisierten Partikel werden gemäß Schritt b) der Partikelzwischenspeichervorrichtung zugeführt, wobei aufgrund von unterschiedlichen elektrischen Ladungen der Partikel und der

Partikelzwischenspeichervorrichtung eine vorrangige Anlagerung der Partikel aus dem Abgas hin zur Partikelspeichervorrichtung eintritt (elektrostatische Kräfte).

Dies führt dazu, dass sich Partikel aufeinander auf der Partikelzwischenspeichervorrichtung ablagern und aneinander kleben. Hier können neben adhäsiven Kräften auch Van-der-Waals-Kräfte wirken.

Die Partikelzwischenspeichervorrichtung ist nun so ausgerichtet bzw. aufgebaut, dass die Partikel bzw. Partikel-Agglomerate nur sehr kurzzeitig dort haften, dort also insbesondere keine (vollständige) Konvertierung der Partikel stattfindet. Vielmehr reißt das Abgas aufgrund der frontalen Anströmung der Partikelzwischenspeichervorrichtung die Partikel-Agglomerate wieder mit und führt diese zum nachgelagerten Partikelabscheider, wo die Partikel-Agglomerate bis zur Regeneration des Partikelabscheiders eingelagert und schließlich umgewandelt werden. Das Umwandeln kann dabei kontinuierlich und/oder diskontinuierlich erfolgen.

Bei diesem Verfahren ist besonders bevorzugt, dass die Partikel-Agglomerate dem Partikelabscheider elektrisch neutralisiert zugeführt werden. Das heißt mit anderen Worten, dass z. B. die Partikelzwischenspeichervorrichtung mit einem elektrischen Pol (Potential) gekoppelt ist, so dass die Partikel bei Kontakt mit dieser Partikelzwischenspeichervorrichtung ihre elektrische Ladung neutralisieren. Die dann zum Partikelabscheider strömenden Partikel-Agglomerate folgen somit den "üblichen" Strömungsverläufen des Abgases, so dass insbesondere elektrostatische Effekte bei der Anlagerung der Partikel-Agglomerate im Partikelabscheider keine (wesentliche) Rolle mehr spielen. Damit kann beim Aufbau bzw. der Ausgestaltung der Partikelabscheider auf herkömmliche Konzepte zurückgegriffen werden.

Darüber hinaus kann es vorteilhaft sein, wenn Schritt d) nur durch die Abgasströmung erfolgt. Das heißt, dass eine aktive Betätigung der Partikelzwischenspeichervorrichtung oder anderer externer Mittel nicht erforderlich ist, um die Partikel-Agglomerate wieder dem Abgasstrom zuzuführen. Das heißt weiter, dass hier die Abgasströmung allein die Partikel-Agglomerate wieder entfernt. Grundsätzlich ist es möglich, unter Berücksichtigung der gewünschten Größe der Partikel-Agglomerate, die Partikelzwischenspeichervorrichtung entsprechend zu gestalten; beispielsweise durch Bereitstellung von großen Anströmflächen, geeigneten (glatten) Oberflächen etc.

Ganz besonders bevorzugt ist eine Weiterbildung des Verfahrens, bei dem im Abgas vor und nach der Partikelzwischenspeichervorrichtung die gemittelte Masse an Partikeln im Abgas gleich ist, die mittlere Anzahl der Partikel nach der Partikelzwischenspeichervorrichtung jedoch geringer ist. Das bringt insbesondere zum Ausdruck, dass die Partikelzwischenspeichervorrichtung tatsächlich praktisch nur zur Bildung von Partikel-Agglomeraten dient, also (zeitlich gemittelt) in etwa die gleiche Masse an Partikeln der Partikelzwischenspeichervorrichtung zugeführt wird, wie letztendlich auch die Partikelzwischenspeichervorrichtung verlässt. Durch das gezielte Aufeinanderanlagern der Partikel hin zu großen Partikel-Agglomeraten wird die Anzahl der Partikel jedoch verringert und die Partikelgröße erhöht. Folglich ist bevorzugt, dass die Partikelagglomerationsein-richtung tatsächlich nur Partikel agglomeriert, indem die Partikel ionisiert und dann zusammengeführt werden.

Die Erfindung findet insbesondere Anwendung in einem Kraftfahrzeug aufweisend eine Verbrennungskraftmaschine mit einem Abgassystem, in dem eine erfindungsgemäße Vorrichtung vorgesehen ist, die so eingerichtet ist, dass das erfindungsgemäße Verfahren durchführbar ist. Bei dem Kraftfahrzeug handelt es sich insbesondere um einen Personenkraftwagen oder einen Lastkraftwagen, insbesondere mit einem Diesel-Motor.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung aufzeigen, diese jedoch nicht darauf beschränkt ist. Es zeigen schematisch:
- Fig. 1:: eine Ausführungsvariante der erfindungsgemäßen Vorrichtung,
- Fig. 2:: die Partikelverteilung vor Erreichen der Partikelagglomerationseinrichtung,
- Fig. 3:: die Partikelverteilung nach Verlassen der Partikelagglomerationseinrichtung,
- Fig. 4:: ein Kraftfahrzeug mit einem Abgassystem,
- Fig. 5:: eine weitere Ausführungsvariante der erfindungsgemäßen Vorrichtung,
- Fig. 6:: ein Detail einer Ausführungsvariante einer Partikelzwischenspeichervorrichtung,
- Fig. 7:: eine weitere Ausführungsvariante einer Partikelzwischenspeichervorrichtung,
- Fig. 8:: noch eine weitere Variante einer Partikelzwischenspeichervorrichtung, und
- Fig. 9:: ein Detail eines Partikelabscheiders nach Art eines Nebenstromfilters.

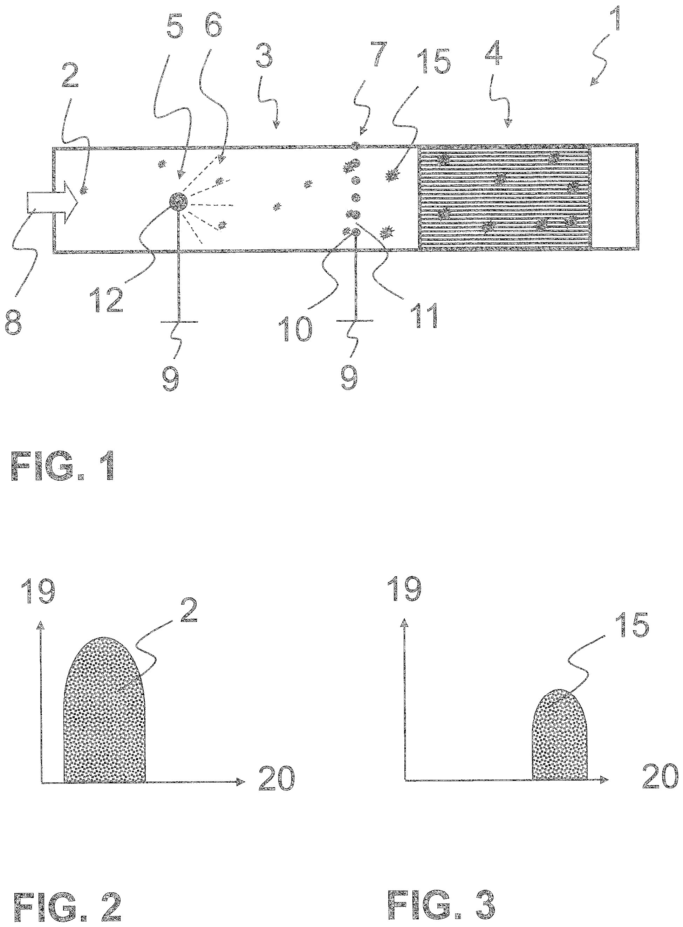

Fig. 1 veranschaulicht eine bevorzugte Ausführungsvariante der erfindungsgemäßen Vorrichtung bzw. des erfindungsgemäßen Verfahrens. Dabei strömt Abgas in Strömungsrichtung 8 in die erfindungsgemäße Vorrichtung 1 ein. Dort tritt das Abgas zunächst in eine Partikelagglomerationseinrichtung 3 ein. Diese Partikelagglomerationseinrichtung 3 umfasst hier eine Apparatur 5 zur Ausbildung eines elektrischen Feldes 6, hier dargestellt nach Art einer Sprühelektrode 12, die mit einem elektrischen (negativen) Pol 9 verbunden ist. In diesem elektrischen Feld 6 werden die Partikel 2 ionisiert, also mit einer elektrischen Ladung versehen, und strömen weiter in Strömungsrichtung 8 hin zu einer für das Abgas durchströmbaren Partikelzwischenspeichervorrichtung 7. Die Partikelzwischenspeichervorrichtung 7 ist ebenfalls mit einem elektrischen (positiven) Pol 9 verbunden, wobei dieser entgegengesetzt zum elektrischen Pol 9 der Sprühelektrode 12 ist. An der Oberfläche der Partikelzwischenspeichervorrichtung 7 lagern sich nun die ionisierten Partikel 2 ab, wobei mehrere Partikel 2 aufeinander auftreffen und zusammenhaften. Die Partikelzwischenspeichervorrichtung 7 ist hier als offene Struktur 10 mit einer Vielzahl von Durchlässen 11 ausgebildet, so dass das Abgas beim Durchströmen der offenen Struktur 10 die groß gewordenen Partikel-Agglomerate 15 mitreißt. So führt die Abgasströmung die nun deutlich größeren Partikel-Agglomerate 15 hin zu einem Partikelabscheider, der in Strömungsrichtung 8 des Abgases gesehen, nach der Partikelzwischenspeichervorrichtung 7 positioniert ist. In dem Partikelabscheider 4 werden die Partikel-Agglomerate 15 eingelagert und umgesetzt, beispielsweise kontinuierlich mittels Stickstoffdioxid (NO₂).

Die Fig. 2 und 3 sollen schematisch veranschaulichen, welche Partikelverteilung im Abgasstrom vor und hinter der Partikelagglomerationseinrichtung vorliegt. Die Abszisse veranschaulicht dabei die mittlere Partikelgröße 20, die Ordinate die Partikelanzahl 19. Aus Fig. 2 ist zu erkennen, dass die gemittelte Partikelverteilung weiter links bezüglich der Abszisse positioniert ist, hier also viele kleine Partikel 2 im Abgasstrom mitgeführt werden. Nach dem Verlassen der Partikelagglomerationseinrichtung kann festgestellt werden, dass die Partikelverteilung weiter rechts auf der Abszisse vorliegt, hier also größere Partikelgrößen 20 vorliegen. Auch die Anzahl der Partikel hat sich deutlich reduziert, weil die Partikel-Agglomerate 15 aus dem Zusammenschluss mehrerer Partikel 2 entstanden sind. Grundsätzlich ist dabei regelmäßig verwirklicht, dass die Gesamtmasse an Partikeln vor und nach der Partikelagglomerationseinrichtung im Wesentlichen gleich ist.

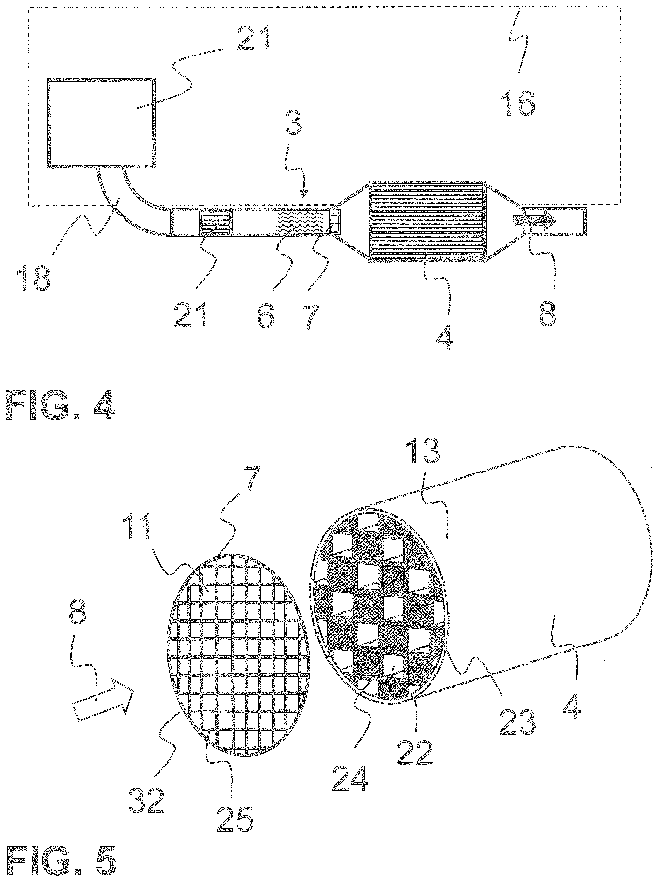

Im Fig. 4 ist schematisch ein Kraftfahrzeug 16 mit einer Verbrennungskraftmaschine 17, beispielsweise einem Diesel-Motor, dargestellt, wobei ein entsprechendes Abgassystem 18 zur Beseitigung von unerwünschten Schadstoffen und Partikeln im Abgas vorgesehen ist. In Strömungsrichtung 8 des Abgases sind in dem Abgassystem 18 ein katalytischer Konverter 21, die Partikelagglomerationseinrichtung 3 und ein Partikelabscheider 4 dargestellt. Selbstverständlich können auch weitere Abgasbehandlungseinheiten hier vorgesehen bzw. ergänzt werden. Schematisch ist angedeutet, dass die Partikelagglomerationseinrichtung 3 wiederum mit einem elektrischen Feld 6 und einer nachfolgenden Partikelzwischenspeichervorrichtung 7 ausgeführt ist. Hierbei kann insbesondere eine kontinuierliche Regeneration des Partikelabscheiders 4 vorgesehen sein, wenn der katalytische Konverter 21 in der Lage ist, das im Abgas enthaltene Stickstoffoxid in Stickstoffdioxid umzuwandeln und so eine entsprechende Umsetzung von Ruß im Partikelabscheider 4 realisiert werden kann.

Fig. 5 veranschaulicht in einer teilweise perspektivischen Darstellung eine Ausführungsvariante einer Partikelzwischenspeichervorrichtung 7 in Kombination mit einem Partikelabscheider 4 nach Art eines Wandstromfilters 13. Dabei strömt das Abgas mit den ionisierten Partikeln in Strömungsrichtung 8 auf die Partikelzwischenspeichervorrichtung 7 zu. Die Partikelzwischenspeichervorrichtung 7 ist hier nach Art eines Gitters 32 ausgeführt, wobei eine Mehrzahl von Drähten 25 so miteinander verbunden ist, dass eine Vielzahl von Durchlässen 11 gebildet sind. Die Durchlässe 11 sind dabei so groß, dass ein Herausfiltern von Rußpartikeln nicht ermöglicht ist, die Durchlässe 11 sind also um ein Vielfaches größer als die Partikel 2 bzw. die Partikel-Agglomerate 15. An dieser Partikelzwischenspeichervorrichtung 7 haften nun mehrere Partikel 2 aneinander und werden schließlich von der Abgasströmung mitgerissen und hin zum Partikelabscheider 4 nach Art eines Wandstromfilters 13 mitgerissen. Der Wandstromfilter 13 zeichnet sich durch eine Vielzahl von Kanälen 22 aus, wobei diese wechselweise einen Verschluss 23 an beiden Stirnseiten aufweisen. Das so auf der einen Seite eintretende Abgas wird durch die poröse Wand 24 hin zu einem Nachbarkanal gezwungen, wobei der gesamte Abgasstrom durch die poröse Kanalwand gedrückt wird. Da nunmehr relativ große Partikel-Agglomerate nur noch herausgefiltert werden müssen, kann die Wand 24 des Wandstromfilters 13 relativ große Poren bzw. Porosität aufweisen, ohne dass die hohe Filterleistung der Vorrichtung reduziert wird. Allerdings hat dies auch zur Folge, dass der Druckverlust über diesen Partikelabscheider 4 deutlich reduziert werden kann.

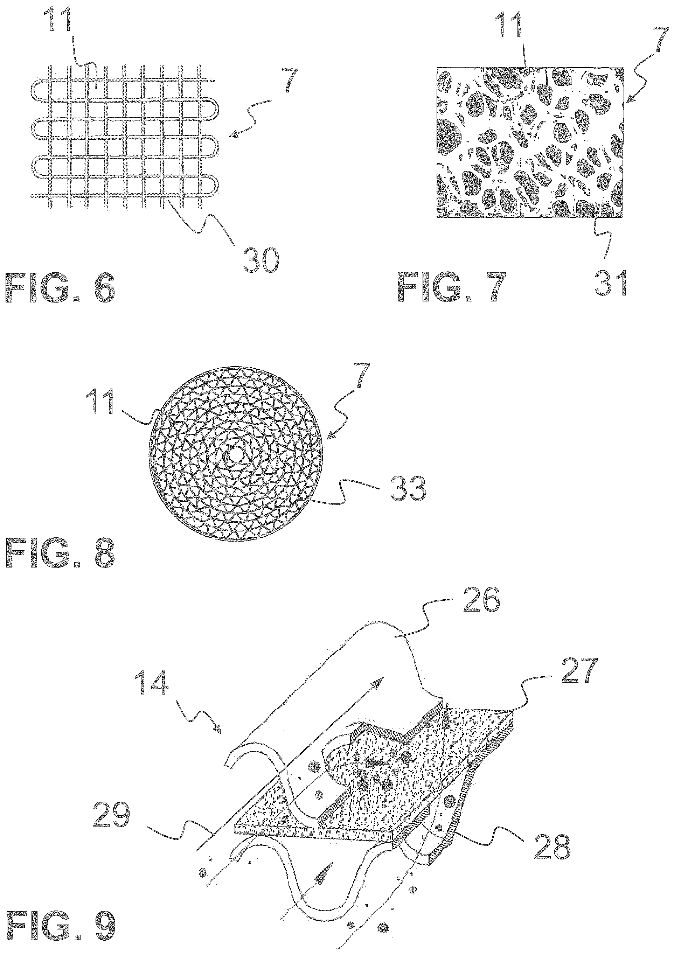

Andere Ausführungsvarianten für die Partikelzwischenspeichervorrichtung 7 sind in den Fig. 6 bis 8 veranschaulicht. Fig. 6 zeigt eine Partikelzwischenspeichervorrichtung 7 nach Art eines Gewebes 30, Fig. 7 nach Art eines (metallischen) Schaums 31 und Fig. 8 nach Art einer scheibenförmig aufgebauten Wabenstruktur 23 mit zumindest teilweise gewellten Metallfolien. All diese Ausführungsvarianten bilden eine offene Struktur 10 aus.

Fig. 9 veranschaulicht nun noch ein Detail, aus dem die Wirkungsweise eines Nebenstromfilters 14 hervorgeht. Der Nebenstromfilter 14 ist hier mit gewellten Metallfolien 26 und glatten metallischen Vliesen 27 ausgebildet, wobei diese so wechselseitig angeordnet sind, dass diese jeweils gemeinsame Kanäle begrenzen. In der Metallfolie 26 sind Umlenkungen 28 vorgesehen, so dass zumindest ein Teil der Abgasströmung hin zum Vlies 27 bewegt wird. Dabei sind die Umlenkungen 28 jedoch nicht so groß, dass der gesamte Kanalquerschnitt blockiert ist, sondern es ist möglich, dass ein Teil des Abgases in dem Kanal an der Umlenkung 28 vorbeiströmen kann, ein so genannter Nebenstrom 29. Über die Kanallänge sind nun bevorzugt mehrere solcher Umlenkungen 28 vorgesehen, so dass eine mehrfache Umlenkung der Abgasströmung und damit eine hohe Wahrscheinlichkeit des Durchströmens eines Vlieses 27 erreicht ist.

### Bezugszeichenliste

- 1: Vorrichtung
- 2: Partikel
- 3: Partikelagglomerationseinrichtung
- 4: Partikelabscheider
- 5: Apparatur
- 6: elektrisches Feld
- 7: Partikelzwischenspeichervorrichtung
- 8: Strömungsrichtung
- 9: elektrischer Pol
- 10: offene Struktur
- 11: Durchlass
- 12: Sprühelektrode
- 13: Wandstromfilter
- 14: Nebenstromfilter
- 15: Partikel-Agglomerat
- 16: Kraftfahrzeug
- 17: Verbrennungskraftmaschine
- 18: Abgassystem
- 19: Partikelanzahl
- 20: Partikelgröße
- 21: katalytischer Konverter
- 22: Kanal
- 23: Verschluss
- 24: Wand
- 25: Draht
- 26: Metallfolie
- 27: Vlies
- 28: Umlenkung
- 29: Nebenstrom
- 30: Gewebe
- 31: Schaum
- 32: Gitter
- 33: Wabenstruktur

## Patentansprüche

1. Vorrichtung (1) zur Behandlung eines Partikel (2) aufweisenden Abgases zumindest umfassend eine Partikelagglomerationseinrichtung (3) und einen elektrisch neutralen Partikelabscheider (4), wobei die Partikelagglomerationseinrichtung (3) wenigstens eine Apparatur (5) zur Ausbildung eines elektrischen Feldes (6) sowie eine für das Abgas durchströmbare Partikelzwischenspeichervorrichtung (7) aufweist und in Strömungsrichtung (8) des Abgases vor dem elektrisch neutralen Partikelabscheider (4) positioniert ist, wobei der elektrisch neutralen Partikelabscheider (4) einen Wandstromfilter (13) oder einen Nebenstromfilter (14) umfasst:
**dadurch gekennzeichnet, dass**
die Partikelzwischenspeichervorrichtung (7) mit einem elektrischen pol (9) verbunden ist, der der Ladung der Partikel (2) entgegengesetzt ist und mindestens eine offene Struktur (10) mit einer Vielzahl von Durchlässen (11) aufweist, so dass die Partikel (2) mit Hilfe des elektrischen Feldes (6) gezielt an der Partikelzwischenspeichervorrichtung (7) anlagerbar sind, wobei die Partikel (2) so aufeinander zur Anlage kommen und sich aufgrund ihrer Haftneigung zueinander vergrößern und, nachdem die Partikel (2) an bzw. auf der Partikelzwischenspeichervorrichtung (7) eine gewünschte Größe erreicht haben, durch das Abgas wieder mitgerissen und dem nachfolgenden Partikelabscheider (4) zugeführt werden.

2. Vorrichtung (1) nach Patentanspruch 1, bei der mindestens eine offene Struktur (10) scheibenförmig ausgebildet ist und zumindest eines der folgenden Elemente umfasst: Gitter (32), Gewebe (30), Vlies (27), Schaum (31), Wabenstruktur (33).

3. Vorrichtung (1) nach einem der vorhergehenden Patentansprüche, bei der die Apparatur (5) zur Ausbildung eines elektrischen Feldes (6) eine Sprühelektrode (12) umfasst.

4. Verfahren zur Behandlung eines Partikel (2) ausweisenden Abgases umfassend zumindest die folgenden Schritte:
a) Aufladen der Partikel (2) in einem elektrischen Feld (6),
b) Zuführen der elektrisch aufgeladenen Partikel (2) zu einer vom Abgas durchströmbaren Partikelzwischenspeichervorrichtung (7) mit mindestens einer offenen Struktur (10) mit einer Vielzahl von Durchlässen (11) -unter Einsatz von elektrischen Anziehungskräften, wobei die Partikelzwischenspeichervorrichtung (7) mit einem elektrischen Pol (9) verbunden ist, der der Ladung der Partikel (2) entgegengesetzt ist.
c) Ablagern der Partikel (2) an der Partikelzwischenspeichervorrichtung (7) aufeinander, so dass Partikel-Agglomerate (15) gebildet werden,
d) Entfernen der Partikel-Agglomerate (15) von der Partikelzwischenspeichervorrichtung (7),
e) Zuführen der Partikel-Agglomerate (15) zu einem elektrisch neutralen Partikelabscheider (4), wobei der elektrisch neutralen Partikelabscheider (4) einen Wandstromfilter (13) oder einen Nebenstromfilter (14) umfasst,
f) Umwandeln der Partikel-Agglomerate (15) in dem Partikelabscheider (4).

5. Verfahren nach Patentanspruch 4, bei dem die Partikel-Agglomerate (15) dem Partikelabscheider (4) elektrisch neutralisiert zugeführt werden.

6. Verfahren nach Patentanspruch 5, bei dem Schritt d) nur durch die Abgasströmung erfolgt.

7. Verfahren nach einem der Patentansprüche 5 bis 6, bei dem im Abgas vor und nach der Partikelzwischenspeichervorrichtung (7) die gemittelte Masse an Partikeln im Abgas gleich ist, die mittlere Anzahl der Partikel nach der Partikelzwischenspeichervorrichtung (7) jedoch geringer ist.

8. Kraftfahrzeug (16) aufweisend eine Verbrennungskraftmaschine (17) mit einem Abgassystem (18), in dem eine Vorrichtung (1) gemäß einem der Patentansprüche 1 bis 4 vorgesehen ist, die so eingerichtet ist, dass ein Verfahren nach einem der Patentansprüche 5 bis 7 durchführbar ist.

## Claims

1. Device (1) for treating exhaust gas which has particles (2), at least comprising a particle agglomeration device (3) and an electrically neutral particle separator (4), wherein the particle agglomeration device (3) has at least one apparatus (5) for generating an electric field (6) and has a particle buffer store device (7) through which the exhaust gas can flow and is positioned upstream of the electrically neutral particle separator (4) in the flow direction (8) of the exhaust gas, wherein the electrically neutral particle separator (4) comprises a wall-flow filter (13) or a partial-flow filter (14):
**characterized in that**
the particle buffer store device (7) is connected to an electrical pole (9) whose charge opposes that of the particles (2) and has at least one open structure (10) with a multiplicity of passages (11), so that, by means of the electric field (6), the particles (2) can be deposited in a targeted manner on the particle buffer store device (7), wherein the particles (2) thus come to rest on top of each other and increase in size owing to their tendency to adhere to one another and, once the particles (2) on the particle buffer store device (7) have reached a desired size, are entrained again by the exhaust gas and supplied to the downstream particle separator (4).

2. Device (1) according to Patent Claim 1, in which at least one open structure (10) is of disk-shaped design and comprises at least one of the following elements: grid (32), fabric (30), nonwoven (27), foam (31), honeycomb structure (33).

3. Device (1) according to one of the preceding claims, in which the apparatus (5) for generating an electric field (6) comprises an emission electrode (12).

4. Method for treating exhaust gas which has particles (2), comprising at least the following steps:
a) charging the particles (2) in an electric field (6),
b) supplying the electrically charged particles (2) to a particle buffer store device (7), through which the exhaust gas can flow and which has at least one open structure (10) with a multiplicity of passages (11), using electric attractive forces, wherein the particle buffer store device (7) is connected to an electrical pole (9) whose charge opposes that of the particles (2),
c) depositing the particles (2) on top of each other on the particle buffer store device (7), such that particle agglomerates (15) are formed,
d) removing the particle agglomerates (15) from the particle buffer store device (7),
e) supplying the particle agglomerates (15) to an electrically neutral particle separator (4), wherein the electrically neutral particle separator (4) comprises a wall-flow filter (13) or a partial-flow filter (14),
f) converting the particle agglomerates (15) in the particle separator (4).

5. Method according to Patent Claim 4, in which the particle agglomerates (15) are supplied to the particle separator (4) in an electrically neutralized state.

6. Method according to Patent Claim 5, in which step d) takes place only by means of the exhaust-gas flow.

7. Method according to one of Patent Claims 5 to 6, in which, in the exhaust gas upstream and downstream of the particle buffer store device (7), the average mass of particles in the exhaust gas is the same, but the average number of particles downstream of the particle buffer store device (7) is lower.

8. Motor vehicle (16) having an internal combustion engine (17) with an exhaust system (18) in which a device (1) according to one of Patent Claims 1 to 4 is provided, said device being set up such that a method according to one of Patent Claims 5 to 7 can be carried out.

## Revendications

1. Dispositif (1) pour le traitement d'un gaz d'échappement présentant des particules (2), comprenant au moins un dispositif d'agglomération de particules (3) et un séparateur de particules électriquement neutre (4), le dispositif d'agglomération de particules (3) présentant au moins un appareil (5) pour créer un champ électrique (6) ainsi qu'un dispositif de stockage intermédiaire de particules (7), pouvant être parcouru par le gaz d'échappement et étant positionné dans le sens de l'écoulement (8) du gaz d'échappement avant le séparateur de particules électriquement neutre (4), le séparateur de particules électriquement neutre (4) comprenant un filtre à paroi (13) ou un filtre en parallèle (14),
**caractérisé en ce que**
le dispositif de stockage intermédiaire de particules (7) est connecté à un pôle électrique (9) qui est opposé à la charge des particules (2) et qui présente au moins une structure ouverte (10) avec une pluralité de passages (11), de telle sorte que les particules (2), à l'aide du champ électrique (6), puissent être accumulées de manière ciblée sur le dispositif de stockage intermédiaire de particules (7), les particules (2) s'accumulant les unes sur les autres et grossissant en raison de leur tendance à adhérer les unes aux autres, et une fois que les particules (2) ont atteint une taille souhaitée contre ou sur le dispositif de stockage intermédiaire de particules (7), étant entraînées par le gaz d'échappement et étant acheminées au séparateur de particules suivant (4).

2. Dispositif (1) selon la revendication de brevet 1, dans lequel au moins une structure ouverte (10) est réalisée sous forme de disque et comprend au moins l'un des éléments suivants : une grille (32), un tissu (30), un non tissé (27), une mousse (31) et une structure en nid d'abeilles (33).

3. Dispositif (1) selon l'une quelconque des revendications de brevet précédentes, dans lequel l'appareil (5), pour créer un champ électrique (6), comprend une électrode de pulvérisation (12).

4. Procédé pour le traitement d'un gaz d'échappement présentant des particules (2), comprenant au moins les étapes suivantes :
a) charge des particules (2) dans un champ électrique (6),
b) acheminement des particules (2) chargées électriquement à un dispositif de stockage intermédiaire de particules (7) pouvant être parcouru par le gaz d'échappement, avec au moins une structure ouverte (10) avec une pluralité de passages (11) en utilisant des forces d'attraction électriques, le dispositif de stockage intermédiaire de particules (7) étant connecté à un pôle électrique (9) qui est opposé à la charge des particules (2),
c) dépôt des particules (2) les unes sur les autres sur le dispositif de stockage intermédiaire de particules (7), de telle sorte que des agglomérats de particules (15) soient formés
d) enlèvement des agglomérats de particules (15) du dispositif intermédiaire de stockage de particules (7),
e) acheminement des agglomérats de particules (15) à un séparateur de particules électriquement neutre (4), le séparateur de particules électriquement neutre (4) comprenant un filtre à paroi (13) ou un filtre en parallèle (14),
f) conversion des agglomérats de particules (15) dans le séparateur de particules (4).

5. Procédé selon la revendication de brevet 4, dans lequel les agglomérats de particules (15) sont acheminés au séparateur de particules (4) sous forme électriquement neutralisée.

6. Procédé selon la revendication de brevet 5, dans lequel l'étape d) n'a lieu que par le biais de l'écoulement de gaz d'échappement.

7. Procédé selon l'une quelconque des revendications de brevet 5 à 6, dans lequel la masse moyenne de particules dans le gaz d'échappement est identique dans le gaz d'échappement avant et après le dispositif de stockage intermédiaire de particules (7), mais le nombre moyen des particules est inférieur après le dispositif de stockage intermédiaire de particules (7).

8. Véhicule automobile (16) présentant un moteur à combustion interne (17) avec un système de gaz d'échappement (18) dans lequel est prévu un dispositif (1) selon l'une quelconque des revendications 1 à 4, qui est prévu de telle sorte qu'un procédé selon l'une quelconque des revendications de brevet 5 à 7 puisse être mis en oeuvre.
